Europäisches Patentamt

European Patent Office

Office européen des brevets

(11) Veröffentlichungsnummer: **0 303 921**

**A1**

## (12) EUROPÄISCHE PATENTANMELDUNG

(21) Anmeldenummer: 88112839.1

(22) Anmeldetag: 06.08.88

(51) Int. Cl.4: **G11B 5/53 , G11B 15/18**

(30) Priorität: 12.08.87 DE 3726767

(43) Veröffentlichungstag der Anmeldung:
22.02.89 Patentblatt 89/08

(84) Benannte Vertragsstaaten:
ES GR

(71) Anmelder: **Deutsche Thomson-Brandt GmbH
Postfach 2060
D-7730 Villingen-Schwenningen(DE)**

(72) Erfinder: **Mahr, Peter
Brandenburger Strasse 20
D-7819 Denzlingen(DE)**

(74) Vertreter: **Körner, Peter, Dipl.-Ing.
Deutsche Thomson-Brandt GmbH Patent-
und Lizenzabteilung Göttinger Chaussee 76
D-3000 Hannover 91(DE)**

(54) **Hubeinrichtung für einen Rotor.**

(57) Hubeinrichtung für einen Rotor (8) durch eine
von einem Stellmotor (M2) angetriebene Gewindespindel (6). Bekannt ist, den Ort innerhalb eines Hubbereiches durch Positionssensoren zu ermitteln. Eine
derartige Ermittlung ist toleranzbehaftet und ungenau. Durch die Erfindung soll der Ort innerhalb eines
Hubbereiches, z.B. der einer Magnetspur innerhalb
einer Magnetbandbreite exakt definierbar sein. Sowohl dem Rotor (8) als auch der antreibenden Gewindespindel (6) ist ein Sensor (S1, S2) zugeordnet.
Beide Sensoren sind nicht lagejustiert und geben bei
jeder Umdrehung einen Impuls ab. Für einen fest
vorgegebenen Meßweg (H) innerhalb einer Hubbewegung wird die Zeitdifferenz Δt der von den Sensoren (S1,S2) abgegebenen Impulse durch Zählschaltungen ermittelt. Bei einer bekannten Steigung (s)
der Gewindespindel (6) kann der Ort einer Magnetspur ermittelt werden.

Ansteuerung eines Ortes innerhalb eines Hubbereiches

Fig.1

## Hubeinrichtung für einen Rotor

Es sind Recorder bekannt, bei denen ein rotierendes Kopfrad ganz oder teilweise von einem Magnetband umschlungen ist und bei denen für den Schreibvorgang aufeinanderfolgender Spuren das Kopfrad oder eine Kopftrommel eine Hubbewegung in Richtung der Rotationsachse ausführt. Eine derartige Hubbewegung wird z.B. bei einer sogenannten Matrix-Aufzeichnung benötigt, mit im wesentlichen parallel zur Bandkante verlaufenden Spuren, gemäß der deutschen Patentanmeldung P 35 09 584. Die Hubbewegung kann auch dazu dienen, das Kopfrad in einen anderen Bereich des Magnetbandes zu verschieben. Das ist z.B. sinnvoll, wenn gemäß der DE-OS 33 07 324 auf dem Magnetband zwei oder mehrere Spurbahnen mit unterschiedlichen Signalen aufgezeichnet sind.

Eine Hubbewegung ist ebenfalls bei einem Recorder mit Schrägspuraufzeichnung vorgesehen, bei dem gemäß der deutschen Patentanmeldung P 35 17 317 zur Einhaltung von Sonderläufen das Kopfrad in Richtung seiner Achse verschoben wird.

Es ist vorgeschlagen worden (P 35 42 064.2), das rotierende Kopfrad auf einer in gleicher Richtung rotierenden Gewindespindel zu lagern. Wenn die Rotationsgeschwindigkeit der Gewindespindel von der des Kopfrades abweicht, bewegt sich die Spindel in Richtung des Gewindes auf- oder abwärts. Zur Erzeugung dieser Hubbewegung wird eine Steuergröße für einen oder beide Motore verändert. Während des der Signalaufzeichnung oder Wiedergabe dienenden Hubes ist eine präzise Einhaltung der Spurlage z.B. durch PLL-Regelung in Verbindung mit Tachosignalen möglich. Eine Hubumkehr sowohl hinsichtlich Zeitdauer als auch Genauigkeit ist in der Anmeldung P 36 29 509 beschrieben.

Für die Positionierung des Kopfrades, z.B. zum Aufzeichnen einer ersten Magnetspur in einem Block nebeneinanderliegender Spuren, parallel zur Bandkante, ist in der Anmeldung P 36 08 379 vorgeschlagen worden, Positionssensoren zu verwenden, durch die einerseits die Seitenkanten des Magnetbandes erkannt werden und andererseits der Ort einer ersten Spur festgelegt wird. Eine derartige Positionierung erfordert, bedingt durch die mechanische Anordnung der Sensoren, eine aufwendige Justage, wobei Toleranzen in einer Massenfertigung unumgänglich sind.

Der Erfindung liegt die Aufgabe zugrunde, den Ort innerhalb eines Hubbereiches, z.B. den einer Magnetspur innerhalb einer Magnetbandbreite, exakt zu definieren.

Diese Aufgabe wird durch die im Anspruch 1 beschriebene Erfindung gelöst. Vorteilhafte Weiterbildungen der Erfindung sind in den Unteransprüchen beschrieben.

Im Prinzip besteht die Erfindung darin, daß sowohl mit dem Rotor, z.B. dem Kopfrad, welches im wesentlichen auf konstante Drehzahl gehalten wird, als auch mit der Welle des Stellmotors, je ein nicht justierter Sensor zusammenwirkt, in dem bei jeder Umdrehung ein Impuls erzeugt wird. Diese Impulse werden Zählschaltungen zugeführt.

Bei exakt gleicher Drehzahl von Rotor- und Stellmotor wird keine Hubwirkung durch die Spindel ausgelöst. So kann in einem Meßvorgang die zeitliche Abweichung der erzeugten Impulse, die durch die mechanische Anordnung der Sensoren bedingt ist, erfaßt werden. Dieser Wert kann abgespeichert und für Messungen als Korrekturfaktor herangezogen werden.

Der eigentliche Meßvorgang zur Bestimmung der exakten Lage eines Punktes des Rotors relativ zu einem Festpunkt, z.B. der Lage eines Magnetkopfes der rotierenden Kopftrommel relativ zu den Kanten eines die Kopftrommel umschlingenden Magnetbandes, wird innerhalb einer Hubbewegung durch langsames "Durchfahren" eines Hubes oder eines Hubbereiches durchge-führt.

Dazu ist es erforderlich, den Hubbereich zu fixieren, der der Messung zugrunde liegen soll. Der Anfangspunkt kann durch einen Positionssensor gegeben sein, z.B. durch eine Lichtschranke, die im Wege des Hubes angeordnet ist. Durch diesen Sensor wird die absolute Position grob erfaßt. Die Ungenauigkeit der Ortsbestimmung darf allerdings den Wert der Steigung der Spindel nicht überschreiten. So muß z.B. bei einer Steigung der Spindel von 0,5 mm pro Umdrehung der ermittelte Wert kleiner als 0,5 mm sein.

Der Endpunkt für den Meßvorgang am Beispiel der Kopftrommel kann durch Abtasten eines Referenz-Magnetbandes gegeben sein, auf welchem die jeweilige optimale Endposition einer Hubrichtung durch eine Magnetspur fixiert ist. In dem Meßvorgang, der nur einmal nach Fertigstellung des Gerätes in einer vorgegebenen Hubrichtung erfolgen muß, werden die Anzahl der Differenzumdrehungen $(n_2-n_1)$ innerhalb des festgelegten Meßbereiches, so wie die Differenzzeit $(\Delta t)$ der Impulse gemessen und abgespeichert.

Diese in einem nicht flüchtigen Speicher abgelegten Werte werden jeweils beim Starten des Gerätes dazu verwendet, die exakte Endposition der Kopftrommel anzufahren. Von diesem Referenzpunkt ausgehend, kann jede gewünschte Hubhöhe durch das beschriebene Meßverfahren ermittelt und positioniert werden. Für eine gewünschte Spur der Hubhöhe H ergibt sich folgender Zusammenhang:

$$H = \frac{s \ast \Delta t}{T} + s \ast (n2-n1)$$

wobei T die Periodendauer der Impulse ist, die von dem Sensor, der mit der Kopftrommel zusammenwirkt, abgegeben werden.

Im folgenden soll die Erfindung durch ein Ausführungsbeispiel anhand einer Figur beschrieben werden.

Fig. 1    zeigt eine Hubeinrichtung für die Kopftrommel eines Videorecorders mit einer rotierenden Gewindespindel

Fig. 2    zeigt ein Diagramm zur Steuerung der Hubeinrichtung

Fig. 3    zeigt eine Einrichtung, durch die der Ort einer Magnetspur, d.h. die Zuordnung der Höhe der Magnetköpfe K1,K2 relativ zum Magnetband 15 eingestellt wird.

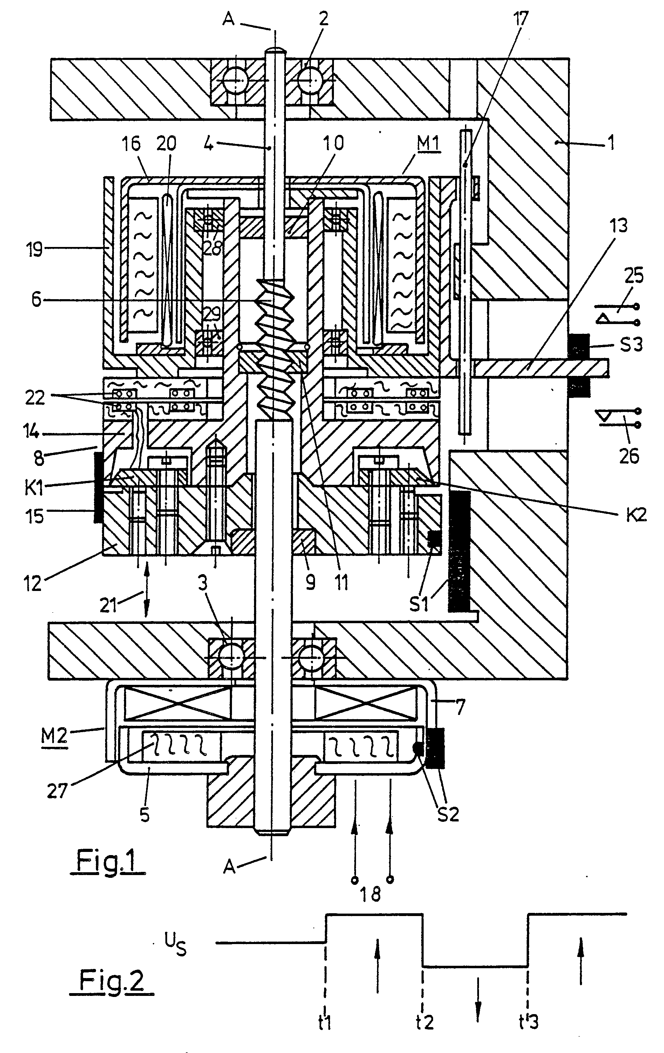

Fig.1 zeigt eine Hubeinrichtung für die Kopftrommel 8 eines Videorecorders. Ein ortsfester Rahmen 1 ist mit den Lagern 2,3 für eine drehbare Welle 4 versehen. Das untere Ende der axial unverschiebbar gelagerten Welle 4 ist mit dem Rotor 5 eines Stellmotors M2 verbunden. Die Welle 4 ist mit einer Gewindespindel 6 versehen. Der Stator 7 des Stellmotors M2 ist ortsfest gelagert, d.h. fest mit dem Rahmen 1 verbunden. Die Kopftrommel 8, bestehend aus Kopfscheibe 12 mit den Köpfen K1,K2 und einem Trommelteil 14, ist über die Gleitlager 9,10 drehbar auf der Welle 4 gelagert. Dabei greift die Gewindespindel 6 in die fest mit der Trommel 14 verbundene Mutter 11 ein. Das Magnetband 15 ist um die Kopftrommel 8 herumgeführt, z.B. über einen Winkel von 180°. Die Signale werden von den Köpfen K1, K2 über die rotierenden Übertrager 22 den Aufnahme-oder Wiedergabeverstärkern zugeführt. An dem Trommelteil 14 ist außerdem der Rotor 16 eines Motors M1 befestigt. Der Stator 19 des Motors M1 ist über die Lager 28,29 auf dem Trommelteil 14 relativ zu diesem Teil 14 drehbar gelagert und enthält die Statorwicklung 20. Der Stator 19 ist über ein Führungsteil 13 und eine Lagerachse 17 so mit dem Rahmen 1 verbunden, daß der Stator 19 in Axialrichtung A-A verschiebbar ist, jedoch eine Drehung von Stator 19 verhindert wird.

Die Teile 9,10,11,12,K1,K2,14 bilden die um die Achse A-A rotierende Kopftrommel 8. Die Teile 13,19,20 bilden den Teil, der nicht rotieren kann, aber zusammen mit der Kopftrommel 8 in Richtung der Achse A-A verschiebbar ist.

Die Wirkungsweise ist folgende: Der die Kopftrommel 8 antreibende Motor M1 wird auf eine konstante Drehzahl von etwa 6000 Upm gebracht, so daß die Kopftrommel 8 mit dieser Drehzahl um die Achse A-A rotiert. Die Welle 4 mit der Gewindespindel 6 wird durch den Stellmotor M2 in derselben Richtung wie die Kopftrommel 8 und mit derselben Umdrehungszahl angetrieben. Dadurch besteht zwischen der Gewindespindel 6 und der Mutter 11 keine Relativbewegung, so daß die rotierende Kopftrommel 8 in Richtung der Achse A-A nicht bewegt wird. In Fig. 2 unten ist dieser Zustand vor t1 angedeutet. Im Zeitpunkt t1 wird die über die Klemmen 18 an die Wicklung 27 angelegte Steuerspannung Us erhöht, so daß der Stellmotor M2 schneller läuft, z.B. mit 6010 Upm. Dadurch dreht sich die Gewindespindel 6 in die Mutter 11 langsam hinein, so daß die Kopftrommel 8 in erwünschter Weise eine Hubbewegung 21 nach unten ausführt. Im Zeitpunkt t2 werden die Steuerspannung Us und damit die Drehzahl der Gewindespindel 6 entsprechend verringert, so daß jetzt die Gewindespindel 6 sich aus der Mutter 11 herausdreht und die Kopftrommel 8 in Hubrichtung 21 nach oben bewegt wird. Der Amplitudensprung der Spannung Us bei t1,t2,t3 bestimmt also die Geschwindigkeit der Hubbewegung 21 und die Dauer t1 - t2 oder t2 - t3 die Amplitude der Hubbewegung 21.

Jeweils an den Grenzen der maximal zulässigen Hubbewegung wirkt der Ausleger von Führungsteil 13 auf Kontakte 25 oder 26 ein, die den Antrieb der Motore M1,M2 so verändern, oder abschalten, daß die Hubbewegung aufhört. Dadurch wird verhindert, daß die Mutter 11 über die Enden der Gewindespindel 6 hinaus bewegt wird.

Für den Stellmotor M2 wird in einem erprobten Ausführungsbeispiel ein eisenloser, elektronisch kommutierter, sogenannter Luftspulenmotor verwendet und für den M1 ein elektronisch kommutierter Flachläufer. Es können jedoch auch mechanisch kommutierte Motoren, Ankermotoren und dgl. verwendet werden.

Die Steuerelektronik für die beiden Motore M1,M2 ist so ausgebildet, daß beide Motore synchron und gleichmäßig hochlaufen und wieder auslaufen. Das ist wichtig, damit nicht durch eine zu große Abweichung der Drehzahlen beider Motore M1,M2 eine unzulässig große Hubbewegung 21 entsteht.

Das Zusammenwirken zwischen der Mutter 11 und der Gewindespindel 6 kann auch durch ein Kugelgewindegetriebe realisiert werden. Bei einem derartigen Getriebe sind über einen Teil eines Gewindeganges Kugeln angeordnet, die etwa nach Durchlauf einer Windung in eine Kammer oder einen Hohlraum der Mutter zurückfallen und dann erneut in einen Gewindegang eingeführt werden. Derartige Kugelgewindegetriebe sind handelsüblich und ermöglichen eine besonders spielfreie, reibungslose und saubere Übertragung der Bewegung.

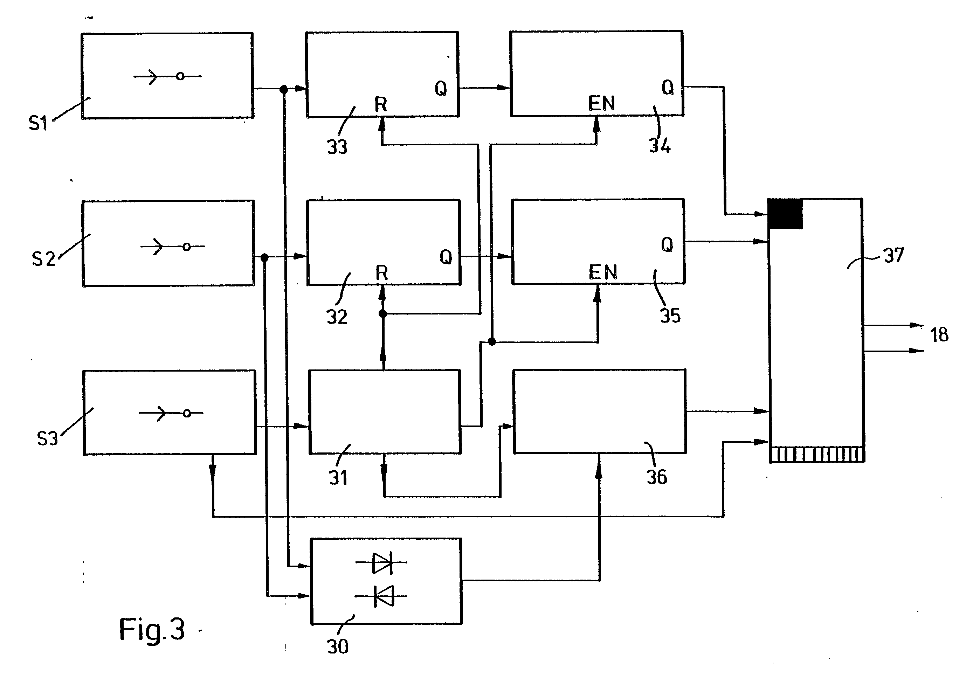

Der Anordnung nach Fig. 1 ist eine Einrichtung gemäß Fig. 3 zugeordnet, durch die der Ort einer Magnetspur, d.h. die Zuordnung der Höhe Magnetköpfe K1,K2 relativ zum Magnetband 15 durch die Spannung US für Stellmotor M2 errechnet und optimal eingestellt wird.

Für diese Einrichtung werden Steuerdaten benötigt, die von Sensoren geliefert werden, welche in Fig. 1 vorgesehen sind.

Während der Hubbewegung gleitet der Ausleger von Führungsteil 13 über einen am Rahmen 1 befestigten Positionssensor S3 hinweg, durch den eine grobe Erfassung einer bestimmten Position der Köpfe K1, K2 innerhalb des Hubbereiches relativ zum Rahmen 1 erfolgt. Der Sensor kann z.B. als Optokoppler oder auch als Näherungsschalter ausgeführt sein.

Mit der Kopftrommel 8 ist ein weiterer Sensor S1 verbunden, in dem bei jeder Umdrehung unabhängig von der jeweiligen Hubstellung, ein Impuls erzeugt wird. Ebenso ist der Stellmotor M2 mit einem Sensor S2 versehen, durch den bei jeder Umdrehung von Welle 4 ein Signal abgegeben wird. Diese von S1 und S2 erzeugten Signale werden, wie in Fig. 3 dargestellt, den Eingängen von Zählschaltungen 32,33 und über Zwischenspeicher 34,35 dem Mikroprozessor 37 zugeführt. Bei "Durchfahren" eines Hubes wird von Sensor S3 ein Lageimpuls abgegeben, durch den eine Timerschaltung 31 angesteuert wird, von der durch Clockimpulse der Ablauf für einen Meßvorgang in den mit dieser Schaltung verbundenen weiteren Schaltungen 32 - 37 ausgelöst und gesteuert wird.

In einem Service-Meßvorgang, welcher nur einmal nach Fertigstellung des Gerätes erfolgen muß, werden die Anzahl der Differenzumdrehungen der Impulse von S1 und S2 durch die Zählschaltungen 32,33 sowie die Differenzzeit Δt beider Impulse für einen festgelegten Meßweg H innerhalb eines Hubdurchlaufes durch den Phasenkomparator 30 in Verbindung mit Zeitmesser 36 gemessen und im Mikroprozessor 37 abgespeichert. Dabei wird der Anfang von Meßweg H durch S3 erkannt, der den Startimpuls für den Meßvorgang auslöst. Das Ende von Meßweg H wird durch ein Referenz-Magnetband gegeben, auf dem eine optimale erste Magnetspur relativ zur Magnetbandkante aufgezeichnet ist. Beim Abtasten dieser Magnetspur von einem der Magnetköpfe K1, K2 während des Hubdurchlaufes wird der Meßvorgang gestoppt.

Die in einem mit dem Mikroprozessor 37 verbundenen, nichtflüchtigen Speicher abgelegten Werte können jeweils beim erneuten Starten des Gerätes dazu verwendet werden, die exakte Endposition von Kopftrommel 8, die der auf den Referenzmagnetband aufgezeichneten optimalen ersten Magnetspur entspricht, durch Steuerung der Spannung 18 für Stellmotor 2 einzustellen. Von diesem Referenzpunkt ausgehend, kann jede gewünschte Hubhöhe durch das beschriebene Meßverfahren ermittelt und positioniert werden.

Durch die beschriebene Schaltung ist eine exakte Einstellung von Magnetspuren im Mikrometer-Bereich möglich. Ein exemplarabhängiger Spurversatz von Recordern innerhalb einer Fertigung wird dadurch vermieden. In einer ausgeführten Schaltung nach Fig. 3 wurde handelsübliche Schaltkreise eingesetzt, wobei diese Schaltkreise ganz oder teilweise in einer Mikroprozessoranordnung integriert sein können.

Folgende Schaltkreise wurden in Fig. 3 eingesetzt:

Pos. 30 MC 14046
Pos. 32 MC 14040
Pos. 33 MC 14040
Pos. 34 MC 14174
Pos. 35 MC 14174

## Ansprüche

1. Hubeinrichtung für einen Rotor (8), der auf einer von einem Stellmotor (M2) angetriebenen, ein Gewinde (6) aufweisenden Welle (4) drehbar und in Axialrichtung (A-A) durch die Steigung (s) des Gewindes (6) verschiebbar angeordnet ist, wobei der Rotor (8) von einem Motor (M1) mit im wesentlichen konstanter Drehzahl angetrieben wird, und der Stellmotor (M2) so gesteuert wird, daß die von ihm angetriebene Welle (4) in einer Hubrichtung eine gegenüber der Drehzahl des Rotors (8) größere und in der anderen Hubrichtung kleinere im wesentlichen konstante Drehzahl hat, und die Differenz der Drehzahlen von Rotor (8) und Welle (4) ein Maß für die Hubgeschwindigkeit und Hubrichtung des Rotors (8) ist, insbesondere für die von einem Magnetband umschlungene Kopftrommel eines Recorders, die durch eine Hubbewegung in Richtung der Achse (A-A) verstellbar ist, **dadurch gekennzeichnet,** daß dem Rotor (8) und der Welle (4) je ein Sensor (S1,S2) zugeordnet ist, in dem bei jeder Umdrehung jeweils ein Impuls abgegeben wird, und daß für einen fest vorgegebenen Meßweg (H) innerhalb einer Hubbewegung die Zeitdifferenz Δt der von den Sensoren (S1,S2) abgegebenen Impulse durch Zählschaltungen ermittelt wird.

2. Hubeinrichtung nach Anspruch 1, **dadurch gekennzeichnet,** daß der Meßweg (H) im linearen Bereich der Hubbewegung liegt.

3. Hubeinrichtung nach Anspruch 1, **dadurch gekennzeichnet,** daß der Meßweg (H) durch einen und/oder mehrere Positionssensoren (S3..Sn) bestimmt ist.

4. Hubeinrichtung nach Anspruch 1, **dadurch gekennzeichnet,** daß der Meßweg (H) am Anfang durch einen Sensor (S3) und am Ende durch ein Magnetband für Meßzwecke bestimmt ist, wobei auf dem Magnetband eine oder mehrere Meßspuren aufgezeichnet sind, deren Lage bei Wiedergabe von den Magnetköpfen (K1,K2) abgetastet wird.

5. Hubeinrichtung nach einem der Ansprüche 1 - 4, **dadurch gekennzeichnet,** daß aus der ermittelten Zeitdifferenz der Impulse (Δ) die Lage (H) einer Magnetspur nach der Formel

$$H = \frac{s \; {}^{*}\Delta t}{T} + s \; {}^{*} \; (n2-n1)$$

errechenbar ist, wobei T die Periodendauer der Impulse des mit konstanter Drehzahl laufenden Motors (M1) ist, n1 die Anzahl der Umdrehungen von Motor (M1) und n2 die Anzahl der Umdrehungen von Welle (4) während des Meßweges (H). s ist die Steigung der Gewindespindel.

6. Hubeinrichtung nach Anspruch 6, **dadurch gekennzeichnet,** daß die Auswertung der Impulse der Sensoren in einem Mikroprozessor (37) erfolgt.

Fig.1

Fig.2

Fig. 3

EP 0 303 921 A1

H87/040-2

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | EP-A-0 224 211 (DEUTSCHE THOMSON BRANDT) * Spalte 2, Zeile 25 - Spalte 4, Zeile 15; Figur 1 * --- | 1,2,5 | G 11 B 5/53 G 11 B 15/18 |
| D,A | EP-A-0 197 333 (DEUTSCHE THOMSON BRANDT) * Spalte 10, Zeile 43 - Spalte 11, Zeile 39; Figuren 9,10 * --- | 1 | |
| A | PATENT ABSTRACTS OF JAPAN, Band 4, Nr. 118 (P-24)[600], 22. August 1980, Seite 75 P 24; & JP-A-55 73 925 (TOKYO SHIBAURA DENKI K.K.) 04-06-1980 * Insgesamt * --- | 1,4 | |
| A | IBM TECHNICAL DISCLOSURE BULLETIN, Band 23, Nr. 1, Juni 1980, Seiten 307,308, IBM Corp., Armonk, N.Y., US; C.C. ROSHON et al.: "Rotary head tape device" * Insgesamt * --- | 1 | RECHERCHIERTE SACHGEBIETE (Int. Cl.4) |
| A | GB-A-1 476 819 (I. ALEXEEVICH KRYLTSOV) * Seite 3, Zeile 10 - Seite 4, Zeile 29; Figuren 2-4 * ----- | 1 | G 11 B |

Der vorliegende Recherchenbericht wurde für alle Patentansprüche erstellt

| Recherchenort | Abschlußdatum der Recherche | Prüfer |
|---|---|---|
| DEN HAAG | 21-11-1988 | LEHNBERG C.R. |